# EUROPEAN PATENT SPECIFICATION

(11) **EP 3 214 274 B1**
(45) Date of publication and mention of the grant of the patent: **01.01.2020**
(21) Application number: 17157451.0
(22) Date of filing: 22.02.2017
(51) Int. Cl.: F01D 11/00, F01D 11/24, F01D 25/24

(54) **ENCAPSULATED COOLING FOR TURBINE SHROUDS**
EINGEKAPSELTE KÜHLUNG FÜR TURBINENUMMANTELUNGEN
REFROIDISSEMENT ENCAPSULÉ POUR VIROLES DE TURBINE

(30) Priority: 26.02.2016 US 201615054218
(43) Date of publication of application: 06.09.2017
(73) Proprietor: General Electric Company, Schenectady, NY 12345 (US)
(72) Inventor: MARUSKO, Mark Willard, West Chester, OH 45069 (US); DURSTOCK, Daniel Lee, West Chester, OH 45069 (US)
(74) Representative: Hafner & Kohl Patent- und Rechtsanwälte Partnerschaft mbB

(56) References cited:
- EP-A2- 2 574 730
- WO-A2-2015/138027
- US-A1- 2005 129 499
- US-A1- 2011 182 724
- US-B2- 9 115 595

## Description

### FIELD OF THE INVENTION

The present disclosure relates generally to a gas turbine engine and, more particularly, to a shroud for a gas turbine engine.

### BACKGROUND OF THE INVENTION

A gas turbine engine generally includes, in serial flow order, a compressor section, a combustion section, a turbine section, and an exhaust section. In operation, air enters an inlet of the compressor section where one or more axial compressors progressively compress the air until it reaches the combustion section. Fuel mixes with the compressed air and burns within the combustion section, thereby creating combustion gases. The combustion gases flow from the combustion section through a hot gas path defined within the turbine section and then exit the turbine section via the exhaust section.

In particular configurations, the turbine section includes, in serial flow order, a high pressure turbine ("HP turbine") and a low pressure turbine ("LP turbine"). The HP turbine and the LP turbine include a one or more axially spaced apart rows of circumferentially spaced apart rotor blades, which extract kinetic and/or thermal energy from the combustion gases. One or more shroud assemblies may be positioned radially outward from and circumferentially enclose the rotor blades.

In certain configurations, each of the shroud assemblies includes a plurality of shrouds or shroud segments annularly arranged to circumferentially enclose one of the rows of rotor blades. Each of the shrouds or shroud segments are typically mounted to a backbone or casing of the gas turbine engine with hangers. This mounting arrangement, however, creates gaps between each adjacent pair of shrouds or shroud segments. Air provided to cool the shroud may instead leak into the combustion gas path through these gaps. This leakage can reduce the efficiency of the gas turbine and increase the specific fuel consumption thereof.

Conventionally, one or more spline seals may be used to minimize combustion gas leakage therebetween. The one or more spline seals are strip-like elements inserted between each adjacent pair shrouds or shroud segments. gas turbine engine. Accordingly, a shroud for a gas turbine engine having one or more features that minimize the leakage of combustion gases from the hot gas path without the need for spline seals would be welcomed in the technology.

US 2005/129499 A1 describes a turbine shroud assembly including forward and aft hangers, an axisymmetric plenum assembly, ceramic shroud segments, ceramic spacers, and forward and aft rope seals. US 2011/182724 A1 describes a cooling system of a ring segment for a gas turbine, which includes first cooling passages disposed in an axial direction of the rotating shaft of a main body of the segment body. WO 2015/138027 A2 describes a system including a blade outer air seal (BOAS), and a meter plate.

### BRIEF DESCRIPTION OF THE INVENTION

Aspects and advantages of the invention will be set forth in part in the following description, or may be obvious from the description. The invention is defined by the appended claims. In the following, apparatus and/or methods referred to as embodiments that nevertheless do not fall within the scope of the claims should be understood as examples useful for understanding the invention.

In one aspect, the present invention is directed to a shroud for a gas turbine according to claim 1.

A further aspect of the present invention is directed to a gas turbine according to claim 10.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended Figs., in which:
FIG. 1 is a schematic cross-sectional view of an exemplary high-bypass turbofan-type gas turbine engine in accordance with the embodiments disclosed herein;
FIG. 2 is a cross-sectional side view of a high pressure turbine portion of the turbofan jet engine shown in FIG. 1, illustrating the positioning of two shroud assemblies therein;
FIG. 3 is a perspective view of one of the shroud assemblies shown in FIG. 2, illustrating an annular arrangement of shrouds therein;
FIG. 4 is a cross-sectional view of the shroud assembly shown in FIG. 3, illustrating the internal features of the shrouds;
FIG. 5 is a cross-section view of one of shrouds in the shroud assembly shown in FIG. 4 in accordance with the embodiments disclosed herein;
FIG. 6 is an enlarged cross-sectional view the shroud shown in FIG. 5, further illustrating the features thereof; and
FIG. 7 is an enlarged cross-sectional view of two of the shrouds in the shroud assembly shown in FIG. 4, illustrating a shiplap joint for sealing between the two shrouds.

Repeat use of reference characters in the present specification and drawings is intended to represent the same or analogous features or elements of the present invention.

### DETAILED DESCRIPTION OF THE INVENTION

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention. As used herein, the terms "first", "second", and "third" may be used interchangeably to distinguish one component from another and are not intended to signify location or importance of the individual components. The terms "upstream" and "downstream" refer to the relative flow direction with respect to fluid flow in a fluid pathway. For example, "upstream" refers to the flow direction from which the fluid flows, and "downstream" refers to the flow direction to which the fluid flows.

Each example is provided by way of explanation of the invention, not limitation of the invention. In fact, it will be apparent to those skilled in the art that modifications and variations can be made in the present invention without departing from the scope thereof. For instance, features illustrated or described as part of one embodiment may be used on another embodiment to yield a still further embodiment. Thus, it is intended that the present invention covers such modifications and variations as come within the scope of the appended claims. Although exemplary embodiments of the present invention will be described generally in the context of a turbine shroud incorporated into a turbofan jet engine for purposes of illustration, one of ordinary skill in the art will readily appreciate that embodiments of the present invention may be applied to any turbine incorporated into any turbomachine and are not limited to a gas turbofan jet engine unless specifically recited in the claims.

The shroud disclosed herein includes an integral first boss positioned adjacent to a first notch and an integral second boss positioned adjacent to a second notch. The first boss is positioned in the second notch of an adjacent shroud to form a shiplap joint. Similarly, the second boss is positioned in the first notch of an adjacent shroud to form another shiplap joint. The shiplap joints minimize the leakage of cooling flow into the hot gas path, while discouraging back-flow of combustion gases into the space between the shroud and stator. Since the first and the second bosses are integrally formed with the shroud, the shroud does not require spline seals or other similar components. In this respect, the shroud disclosed herein reduces the complexity, assembly time, and cost the gas turbine without the need for spline seals.

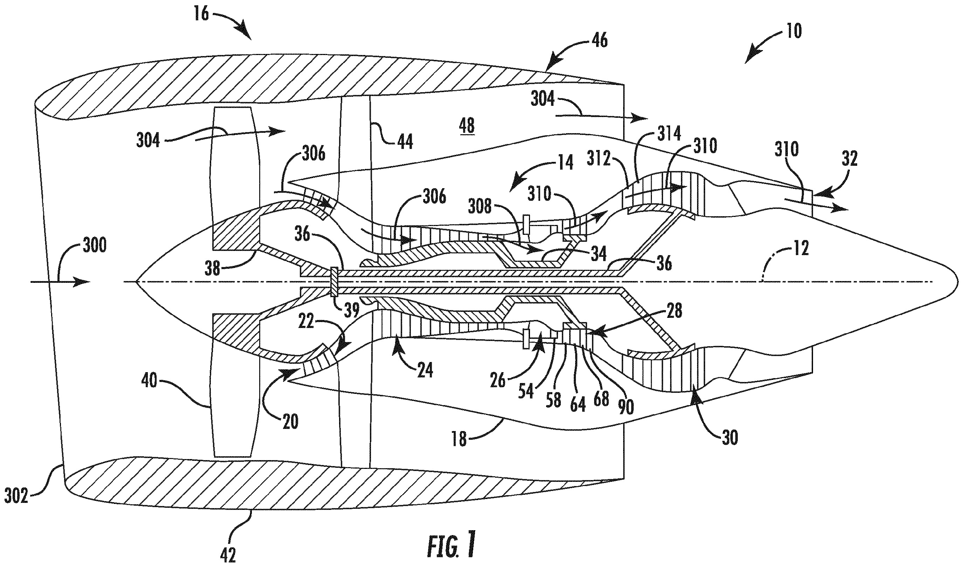

Referring now to the drawings, wherein identical numerals indicate the same elements throughout the figures, FIG. 1 is a schematic cross-sectional view of an exemplary high-bypass turbofan-type gas turbine engine 10 ("turbofan 10") as may incorporate various embodiments disclosed herein. As shown in FIG. 1, the turbofan 10 defines a longitudinal or axial centerline axis 12 extending therethrough for reference. In general, the turbofan 10 may include a core turbine or gas turbine engine 14 disposed downstream from a fan section 16.

The core turbine engine 14 may generally include a substantially tubular outer casing 18 that defines an annular inlet 20. The outer casing 18 may be formed from a single casing or multiple casings. The outer casing 18 encloses, in serial flow relationship, a compressor section having a booster or low pressure compressor 22 ("LP compressor 22") and a high pressure compressor 24 ("HP compressor 24"), a combustion section 26, a turbine section having a high pressure turbine 28 ("HP turbine 28") and a low pressure turbine 30 ("LP turbine 30"), and an exhaust section 32. A high pressure shaft or spool 34 ("HP shaft 34") drivingly couples the HP turbine 28 and the HP compressor 24. A low pressure shaft or spool 36 ("LP shaft 36") drivingly couples the LP turbine 30 and the LP compressor 22. The LP shaft 36 may also couple to a fan spool or shaft 38 of the fan section 16. In some embodiments, the LP shaft 36 may couple directly to the fan spool 38, such as in a direct-drive configuration. In alternative configurations, the LP shaft 36 may couple to the fan spool 38 via a reduction gear 39, such as in an indirect-drive or geared-drive configuration.

As shown in FIG. 1, the fan section 16 includes a plurality of fan blades 40 coupled to and extending radially outwardly from the fan spool 38. An annular fan casing or nacelle 42 circumferentially encloses the fan section 16 and/or at least a portion of the core turbine 14. The nacelle 42 may be supported relative to the core turbine 14 by a plurality of circumferentially-spaced apart outlet guide vanes 44. Furthermore, a downstream section 46 of the nacelle 42 may enclose an outer portion of the core turbine 14 to define a bypass airflow passage 48 therebetween.

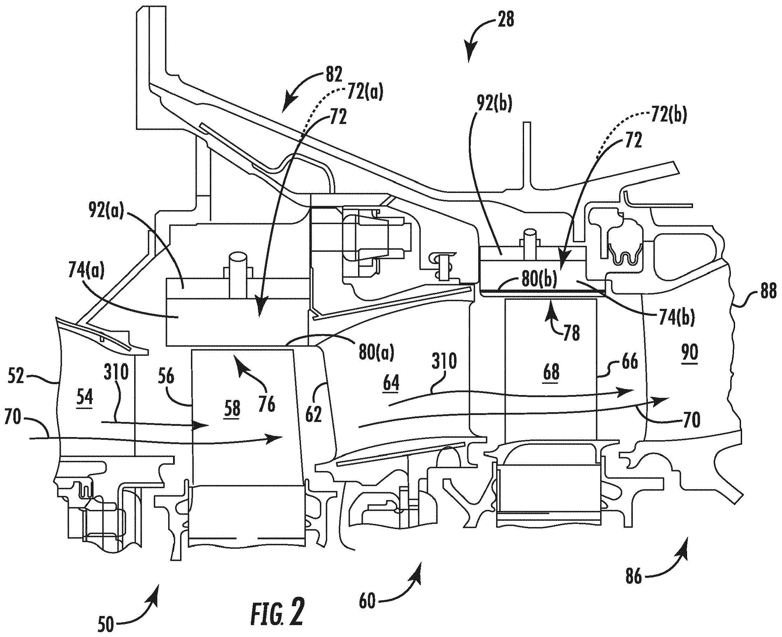

FIG. 2 is a cross-sectional view of the HP turbine 28 portion of the core turbine 14 shown in FIG. 1, which may incorporate various embodiments disclosed herein. As shown in FIG. 2, the HP turbine 28 includes, in serial flow relationship, a first stage 50 having a row 52 of one or more turbine nozzles 54 (only one shown) axially spaced apart from a row 56 of one or more turbine rotor blades 58 (only one shown). The HP turbine 28 further includes a second stage 60 having a row 62 of one or more turbine nozzles 64 (only one shown) axially spaced apart from a row 66 of one or more turbine rotor blades 68 (only one shown). The HP turbine 28 may include a third stage 86 having a row 88 of one or more turbine nozzles 90 (only one shown). Although not shown in FIG. 2, the third stage 86 may also include a row of turbine rotor blades.

The turbine rotor blades 58, 68 extend radially outwardly from and are coupled to the HP shaft 34 (FIG. 1). As shown in FIG. 2, the turbine nozzles 54, 64, 90 and the turbine rotor blades 58, 68 at least partially define a hot gas path 70 for routing combustion gases from the combustion section 26 (FIG. 1) through the HP turbine 28. As shown in FIG. 1, the rows 52, 62, 88 of the turbine nozzles 54, 64, 90 are annularly arranged about the HP shaft 34, and the rows 56, 66 of the turbine rotor blades 58, 68 are circumferentially spaced around the HP shaft 34.

As shown in FIG. 2, various embodiments of the HP turbine 28 include at least one turbine shroud assembly 72. For example, the HP turbine 28 may include a first shroud assembly 72(a) and a second turbine shroud assembly 72(b). Each of the first and the second shroud assemblies 72(a), 72(b) generally forms a ring around or circumferentially encloses the corresponding row 56, 66 of turbine rotor blades 58, 68. Each of the first and the second shroud assemblies 72(a), 72(b) includes a turbine shroud or shroud seal 74(a), 74(b) radially spaced from a corresponding blade tip 76, 78 of the turbine rotor blades 58, 68. This arrangement forms clearance gaps between the blade tips 76, 78 and sealing surfaces or hot side surfaces 80(a), 80(b). It is generally desirable to minimize the clearance gap between the blade tips 76, 78 and the turbine shroud seals 74(a), 74(b), particularly during cruising operation of the turbofan 10, to reduce leakage from the hot gas path 70 over the blade tips 76, 78 and through the clearance gaps.

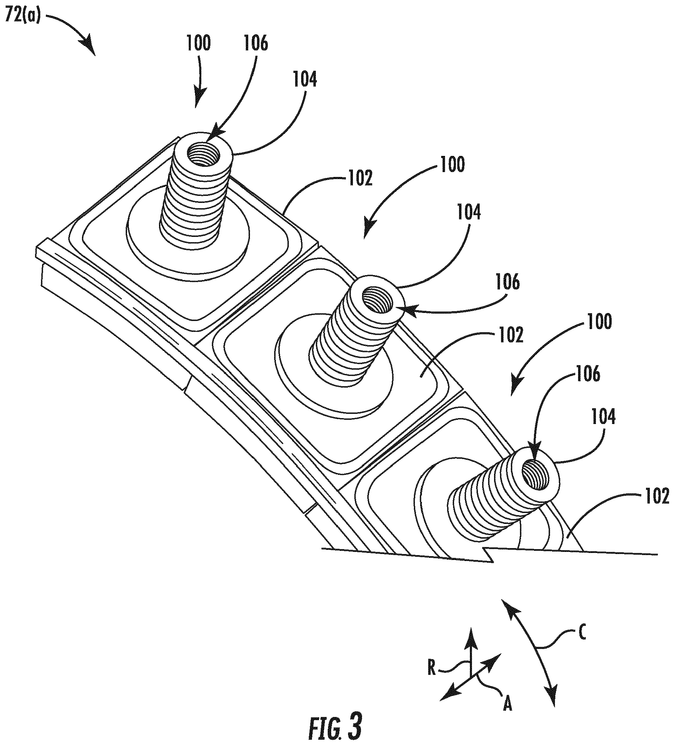

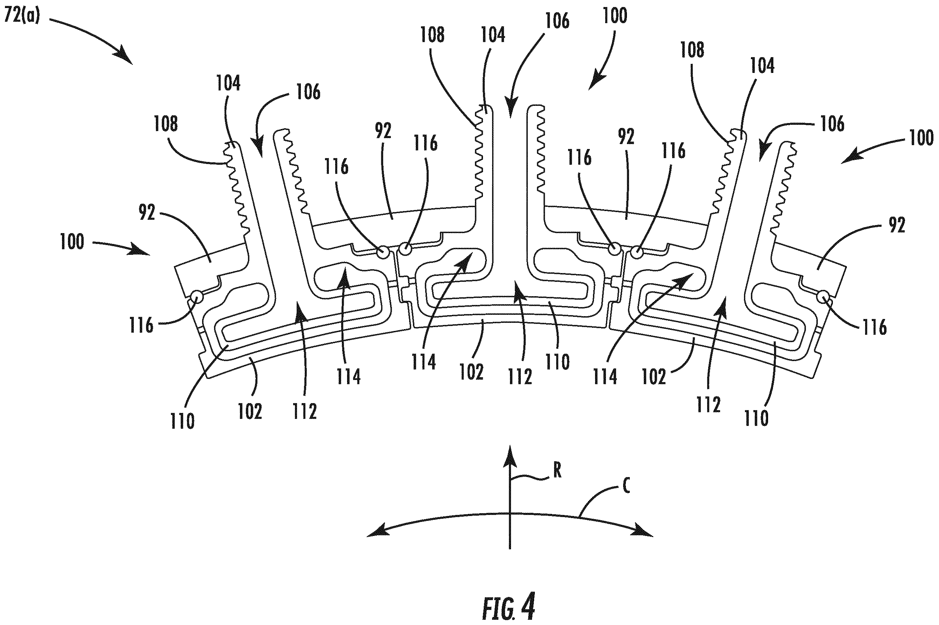

In particular embodiments, at least one of the first and the second shroud assemblies 72(a), 72(b) is formed from a plurality of annularly-arranged shrouds 100 (FIGS. 3 and 4) as will be discussed in greater detail below. Each of the first and the second shroud assemblies 72(a), 72(b) may be connected to a corresponding static structure such as a first stator 92(a) and a second stator 92(b). In alternate embodiments, each of the first and the second shroud assemblies 72(a), 72(b) may be connected to a backbone or casing 82 of the core turbine 14.

As illustrated in FIG. 1, air 300 enters an inlet portion 302 of the turbofan 10 during operation thereof. A first portion 304 of the air 300 flows into the bypass flow passage 48, and a second portion 306 of the air 300 enters the inlet 20 of the LP compressor 22. The LP compressor 22 progressively compresses the second portion of air 306 flowing therethrough en route to the HP compressor 24. The HP compressor 24 further compresses the second portion 306 of the air 300 flowing therethrough, thereby providing compressed air 308 to the combustion section 26 where it mixes with fuel and burns to provide combustion gases 310.

The combustion gases 310 flow through the HP turbine 28 where the turbine nozzles 54, 64, 90 and turbine rotor blades 58, 68 extract a first portion of kinetic and/or thermal energy therefrom. This energy extraction supports operation of the HP compressor 24. The combustion gases 310 then flow through the LP turbine 30 where sequential stages of LP turbine nozzles 312 and LP turbine rotor blades 314 coupled to the LP shaft 36 extract a second portion of thermal and/or kinetic energy therefrom. This energy extraction causes the LP shaft 36 to rotate, thereby supporting operation of the LP compressor 22 and/or rotation of the fan spool or shaft 38. The combustion gases 310 then exit through the exhaust section 32 of the core turbine 14.

Along with the turbofan 10, the core turbine 14 serves a similar purpose and sees a similar environment in land-based gas turbines, turbojet engines in which the ratio of the first portion 304 of air 300 to the second portion 306 of air 300 is less than that of a turbofan, and unducted fan engines in which the fan section 16 is devoid of the nacelle 42. In each of the turbofan, turbojet, and unducted engines, a speed reduction device (e.g., the reduction gearbox 39) may be included between any shafts and spools. For example, the reduction gearbox 39 may be disposed between the LP shaft 36 and the fan spool 38 of the fan section 16.

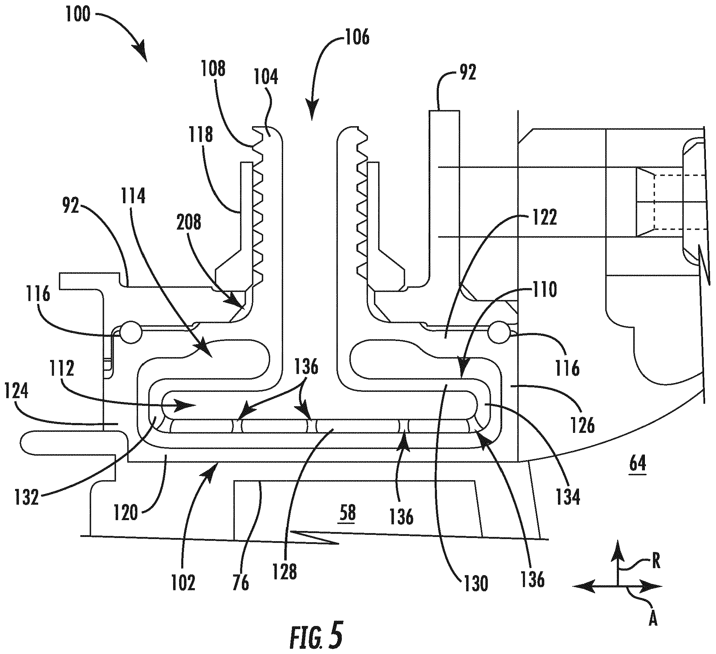

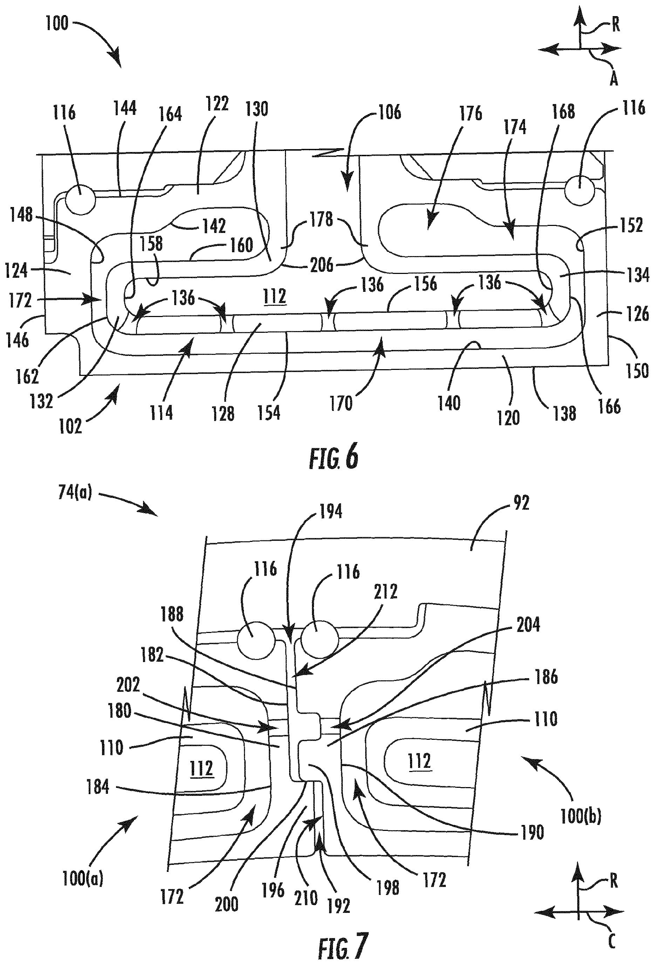

FIGS. 3-7 illustrate one embodiment of the shroud 100, which may be incorporated into the first and/or second shroud assemblies 72(a), 72(b). More specifically, FIG. 3 is a perspective view of a portion of the first shroud assembly 72(a), illustrating an annular arrangement of shrouds 100. FIG. 4 is a cross-sectional view of the first shroud assembly 72(a), illustrating some of the internal features of the shrouds 100. FIG. 5 is a cross-sectional view of one of the shrouds 100 in the first shroud assembly 72(a), and FIG. 6 is an enlarged cross-sectional view the shroud 100. FIG. 7 is an enlarged cross-sectional view of two of the shrouds 100 in the first shroud assembly 72(a), illustrating a shiplap joint 200 for circumferentially coupling the two shrouds 100.

As illustrated in FIGS. 3-7, the shroud 100 defines an axial direction A, a radial direction R, and a circumferential direction C. In general, the axial direction A extends along the longitudinal axis 12, the radial direction R extends orthogonally outwardly from the longitudinal axis 12, and the circumferential direction C extends concentrically around the longitudinal axis 12.

As illustrated in FIGS. 3 and 4, the first shroud assembly 72(a) includes a plurality of shrouds 100 annularly arranged to circumferentially enclose the row 56 of turbine rotor blades 58 in the HP turbine 28. As such, each of the shrouds 100 are axially aligned and positioned circumferentially adjacent to each other. For clarity, FIGS. 3 and 4 only show three of the shrouds 100 forming the first shroud assembly 72(a). Nevertheless, the first shroud assembly 72(a) may include additional shrouds 100 to fully circumferentially enclose the row 56 of turbine rotor blades 58. In this respect, the first shroud assembly 72(a) may include as many or as few shrouds 100 as is necessary or desired.

As illustrated in FIGS. 3-5, the shroud 100 includes an outer box 102 and an inner box 110 positioned within the outer box 102. The inner box 110 defines an inner chamber 112, and the outer box 102 and the inner box 110 collectively define an outer chamber 114. The inner chamber 112 is in fluid communication with the outer chamber 114 via one or more impingement apertures 136. A stem 104 extending radially outwardly from the outer box 102 defines an inlet passage 106 in fluid communication with the inner chamber.

Referring now to FIGS. 5 and 6, the outer box 102 includes a radially inner wall 120 radially spaced apart from a radially outer wall 122. The radially inner wall 120 is positioned proximate to the row 56 of turbine rotor blades 58 and includes a radially inner surface 138 and a radially outer surface 140. The radially inner surface 138 corresponds to the hot side surface 80(a). Analogously, the radially outer wall 122 includes a radially inner surface 142 and a radially outer surface 144. The outer box 102 also includes a first axial wall 124 axially spaced apart from a second axial wall 126. The first axial wall 124 includes an outer surface 146 and an inner surface 148, and the second axial wall 126 includes an outer surface 150 and an inner surface 152. As shown in FIG. 7, the outer box 102 further includes a first circumferential wall 180 circumferentially spaced apart from a second circumferential wall 186. The first circumferential wall 180 includes an outer surface 182 and an inner surface 184, and the second circumferential wall 186 includes an outer surface 188 and an inner surface 190. In this respect, the embodiment of the outer box 102 shown in FIGS. 3-7 has a generally cube-like or cuboid-like shape. Although, the outer box 102 may have different shapes (e.g., trapezoidal, triangular, hemispherical, circular, etc.) in other embodiments.

Referring again to FIGS. 5 and 6, the inner box 110 includes a radially inner wall 128 radially spaced apart from a radially outer wall 130. The radially inner wall 128 includes a radially inner surface 154 and a radially outer surface 156. Similarly, the radially outer wall 130 includes a radially inner surface 158 and a radially outer surface 160. The inner box 110 also includes a first axial wall 132 axially spaced apart from a second axial wall 134. The first axial wall 132 includes an outer surface 162 and an inner surface 164, and the second axial wall 134 includes an outer surface 166 and an inner surface 168. The inner box 110 further includes a first circumferential wall circumferentially spaced apart from a second circumferential wall. The shape of the inner box 110 may generally correspond to the shape of the outer box 102. In the embodiment shown in FIGS. 3-7, for example, the inner box 110 has a generally cube-like or cuboid-like shape like the outer box 102. Although, the inner box 110 may have a different shape (e.g., trapezoidal, triangular, hemispherical, circular, etc.) than the outer box 102 in other embodiments.

An annular ligament 178 integrally couples to the inner box 110 and the outer box 102. In particular, the annular ligament 178 suspends the inner box 110 within the outer box 102 in a spaced apart relationship, thereby defining the outer chamber 114 as will be discussed in greater detail below. A radially outer portion 174 of the outer chamber 114 axially and circumferentially encloses the annular ligament 178. In this respect, the annular ligament 178 is axially and circumferentially positioned between the radially outer portion 174 of the outer chamber 114 and the inlet passage 106. Furthermore, the annular ligament 178 is positioned at the transition between the inlet passage 106 and the inner chamber 112. In the embodiment shown in FIG. 6, the annular ligament includes a radius 206.

As best illustrated in FIG. 6, the outer chamber 114 includes a radially inner portion 170 radially spaced from the radially outer portion 174 by a radially central portion 172. The radially inner and the radially outer portions 170, 174 are generally axially and circumferentially aligned. In this respect, the radially inner portion 170 may have a cube or cuboid shape, and the radially outer portion 174 may have an annular shape to accommodate the inlet passage 106 as will be discussed in greater detail below. The radially central portion 172 axially and circumferentially surrounds the inner box 110, thereby giving the radially central portion 172 a generally annular shape as well. In the embodiment shown in FIG. 6, the radially outer portion 174 includes a radially enlarged portion 176 positioned proximate the inlet passage 106. Although, the radially outer portion 174 may have a constant radial thickness in other embodiments as well. The radially inner portion 170, the radially outer portion 174, and the radially central portion 172 are continuous portions of the outer chamber 114 and may have other shapes beyond those described above.

As mentioned above, the inner box 110 is positioned within the outer box 102, and the outer chamber 114 is defined therebetween. More specifically, the radially inner portion 170 of the outer chamber 114 is positioned radially between the radially outer surface 140 of the radially inner wall 120 of the outer box 102 and the radially inner surface 154 of the radially inner wall 128 of the inner box 110. Similarly, the radially outer portion 174 of the outer chamber 114 is positioned radially between the radially outer surface 160 of the radially outer wall 130 of the inner box 110 and the radially inner surface 142 of the radially outer wall 122 of the outer box 102. The radially central portion 172 of the outer chamber 114 is positioned axially between the inner surface 148 of the first axial wall 124 of the outer box 102 and the outer surface 162 of the first axial wall 132 of the inner box 110. The radially central portion 172 of the outer chamber 114 is also positioned axially between the inner surface 152 of the second axial wall 126 of the outer box 102 and the outer surface 166 of the second axial wall 134 of the inner box 110. Furthermore, the radially central portion 172 is also positioned between the first circumferential wall 180 of the outer box 102 and the first circumferential wall of the inner box 110 and between the second circumferential wall 186 of the outer box 102 and the second circumferential wall of the inner box 110.

Accordingly, the outer box 102 encapsulates or encloses a portion of the inner box 110. In particular, the outer box 102 encloses the portions of the inner box 110 positioned axially and circumferentially outwardly from the stem 104. In this respect, the outer box 102 does not encapsulate the portions of the inner box 110 radially aligned with the stem 104 and the inlet passage 106. In some embodiments, the outer box 102 encapsulates at least fifty percent of the inner box 110. In other embodiments, the outer box 102 encapsulates at least seventy percent of the inner box 110. In further embodiments, the outer box 102 encapsulates at least ninety percent of the inner box 110.

As previously mentioned, the inner box 110 defines the inner chamber 112. More specifically, the inner chamber 112 is positioned radially between the radially outer surface 156 of the radially inner wall 132 and the radially inner surface 158 of the radially outer wall 130 of the inner box 110. The inner chamber 112 is also axially positioned between the inner surface 164 of the first axial wall 132 and the inner surface 168 of the second axial wall 134 of the inner box 110. Furthermore, inner chamber 112 is circumferentially positioned between the first and the second circumferential walls of the inner box 110. In this respect, the inner chamber 112 in the embodiment shown in FIG. 6 generally has a cube-like or cuboid-like shape. Although, the inner chamber 112 may have any suitable shape.

As mentioned above, the one or more impingement apertures 136 facilitate fluid communication between the inner chamber 112 and the outer chamber 114. More specifically, the radially inner wall 128 of the inner box 110 defines the one or more impingement apertures 136. In this respect, the one or more impingement apertures 136 extend between the radially inner surface 154 and the radially outer surface 156 of the radially inner wall 128. As such, the one or more impingement apertures 136 allow fluid (e.g., cooling air) to flow between the inner and the outer cavities 112, 114. In particular, the one or more impingement apertures 136 direct fluid flow onto radially outer surface 140 of the radially inner wall 120 of the outer box 102. Although the embodiment shown in FIG. 6 includes five impingement apertures 136, the radially inner wall 128 of the inner box 110 may define more or less impingement apertures 136 as is needed or desired. The impingement apertures 136 may be uniformly distributed over the radially inner wall 128 (e.g., in rows and/or columns) or non-uniformly distributed over the radially inner wall 128. Furthermore, the impingement apertures 136 may have a circular cross-section or any other suitable cross-section (e.g., rectangular, etc.). In some embodiments, the inner box 110 may include one or more turbulators (not shown) to create turbulence in the fluid flowing through the impingement apertures 136.

Referring again to FIG. 5, the stem 104 extends radially outwardly from the radially outer wall 122 of the outer box 102. In this respect, the stem 104 defines the inlet passage 106, which is in fluid communication with the inner chamber 112. The stem 104 preferably includes one or more threads 108 that threadingly receive a fastener 118 for coupling the shroud 100 to a stator 92 as will be discussed in greater detail below.

Referring now to FIG. 7, the first and the second circumferential walls 180, 186 may respectively define a first outlet port 202 and a second outlet port 204. More specifically, the first outlet port 202 extends between the outer and the inner surfaces 182, 184 of the first circumferential wall 180. Similarly, the second outlet port 204 extends between the outer and the inner surfaces 188, 190 of the second circumferential wall 186. In this respect, the first and the second outlet ports 202, 204 facilitate fluid communication between the outer chamber 114 and the exterior of the shroud 100. In the embodiment shown in FIG. 7, the first and the second outlet ports 202, 204 are radially aligned. The first outlet port 202 includes a varying diameter and the second outlet port 204 includes a constant diameter in the embodiment shown in FIG. 7. Nevertheless, the first outlet port 202 may have a constant diameter, and the second outlet port 204 may have a varying diameter. In alternate embodiments, a first outlet port 202 and a second outlet port 204 may be defined by the first axial wall 124 and the second axial wall 126.

The first and the second circumferential walls 180, 186 of the outer box 102 respectively include a first boss 196 adjacent to a first notch 212 and a second boss 198 adjacent to a second notch 210. In the embodiment shown in FIG. 7, the first boss 196 is positioned radially inwardly from the second boss 198. Although, the first boss may be positioned radially outwardly from the second boss in some embodiments as well. In other embodiments, the first and the second bosses may be radially aligned. In this respect, the first and the second bosses on one shroud 100 (i.e., the middle shroud 100) may be positioned radially outwardly from the first and the second bosses on the adjacent shrouds 100 as shown in FIG. 4. As best illustrated in FIG. 7, the first boss 196 on a first shroud 100(a) is positioned in the second notch 210 and engages the second boss 198 on a second shroud 100(b) to form a shiplap joint 200. Analogously, the second boss 198 is positioned in the first notch 212. In this respect, the outermost surfaces of the first and the second bosses 196, 198 extend circumferentially past one another to create contact between the adjacent radial side surfaces thereof. Although not shown, the second boss on the first shroud 100(a) engages the first boss on an adjacent shroud to form another shiplap joint, and the first boss of second shroud 100(b) engages the second boss of an adjacent shroud to form a further shiplap joint. In this respect, each shroud 100 in the shroud assembly 72(a) forms a shiplap joint 200 with each adjacent shroud 100 to minimize the amount of combustion gases 310 that flow therebetween. In alternate embodiments, each pair of adjacent shrouds 100 in the first shroud assembly 72(a) may be coupled with a tongue-and-groove connection (not shown) or any other suitable type of connection.

The shroud 100 may be constructed from suitable nickel-based or cobalt-based superalloys (e.g., Rene N5® Alloy produced by General Electric Co. of Schenectady, New York, USA). In some embodiments, the shroud 100 may include a thermal barrier coating (not shown).

In the embodiment shown in FIGS. 4 and 5, the shroud 100 mounts to the stator 92 of the turbofan 10. In particular, the stator 92 defines one or more apertures 208 through which the stem 104 extends. The fastener 118 engages the one or more threads 108 disposed on the stem 104. In this respect, the fastener 118 secures the shroud 100 to the stator 92. In the embodiment shown in FIGS. 4-7, one or more seals 116 are positioned between the radially outer wall 122 of the outer box and the stator 92. The fastener 118 compresses the one or more seal 116 to seal between the outer box and the stator 92. Other embodiments, however, may not include the seals 116. Although, the shroud 100 may mount in the same or a different manner to a different component or portion of the turbofan 10 such as the backbone or casing 82.

As shown in FIG. 4, the first shroud assembly 72(a) includes multiple annularly arranged shrouds 100 mounted to the stator 92 or other stationary component as described in greater detail above. In this respect, each adjacent pair of shrouds 100 forms a radially inner gap 192 and a radially outer gap 194 therebetween as best illustrated in FIG. 7. Each of the shrouds 100 are positioned relative to the adjacent shrouds 100 to form the shiplap joint 200 therebetween. The first and the second outlet ports 202, 204 provide fluid communication between the outer chamber 114 and the radially outer gap 194. The radially inner and the radially outer gaps 192, 194 are separated by the shiplap joint 200.

During operation of the turbofan 10, cooling air (e.g., bleed air from the LP and/or HP compressor 22, 24) flows through each shroud 100, thereby cooling the same. More specifically, cooling air enters the shroud 100 through the inlet passage 106. From the inlet passage 106, the cooling air flows into the inner chamber 112. The cooling air then flows through the one or more impingement apertures 136 defined in the radially inner wall 128 of the inner box 110 into the radially inner portion 170 of the outer chamber 114. In particular, the one or more impingement apertures 136 direct the cooling air onto radially outer surface 140 of the radially inner wall 120 of the outer box 102. This facilitates cooling of the radially inner wall 120 of the outer box 102, the hottest portion of the shroud 100 during turbofan 10 operation due to its proximity to the hot gas path 70. The turbulators, if present, create turbulence in the cooling air to further facilitate heat transfer. The cooing air flows throughout the radially inner, radially central, and radially outer portions 170, 172, 174 of the outer chamber 114. The cooling air then exits the shroud 100 through the first and the second outlet ports 202, 204 and flows into the radially outer gap 194.

The annular ligament 178 and the radially outer wall 130 of the inner box 110 permit the inner box 110 and the outer box 102 to thermally expand and thermally contract independently. More specifically, the outer box 102 is positioned closer to the hot gas path 70 than the inner box 110. As such, the outer box 102 experiences greater temperatures than the inner box 110 and, accordingly, thermally expands more than the inner box 110. The differing amounts of thermal expansion between the inner and the outer boxes 102, 110 may exert stress on the shroud 100. This stress is distributed gradually through the radius 206 of the annular ligament 178 and along the length of the radially outer wall 130 of the inner box 110. In this respect, the stress in the shroud 100 is minimized, thereby permitting the inner box 110 and the outer box 102 to thermally expand and thermally contract independently.

The shiplap joint 200 between each adjacent pair of shrouds 100 minimizes the amount of cooling air that escapes therebetween from the hot gas path 70 into the hot gas path 70. Furthermore, the shiplap joint 200 discourages the combustion gases 310 from flowing radially outwardly therethrough. That is, the shiplap joint 200 discussed in greater detail above creates a seal between the pair of adjacent shrouds 100. Nevertheless, some small amount of combustion gases 310 may flow past the shiplap joint 200 (i.e., from the radially inner gap 192 to the radially outer gap 194). In this respect, cooling air exiting the adjacent shrouds 100 through the first and the second outlet ports 202, 204 intermixes with the combustion gases 310 present in the radially outer gap 194. The cooling air is substantially cooler than the combustion gases 310 even after convectively absorbing heat from the shroud 100. As such, the cooling air reduces the temperature of the combustion gases 310 in the radially outer gap 194.

Preferably, the shroud 100 is formed via additive manufacturing. The term "additive manufacturing" refers to any process which results in a useful, three-dimensional object and includes a step of sequentially forming the shape of the object one layer at a time. Additive manufacturing processes include three-dimensional printing (3DP) processes, laser-net-shape manufacturing, direct metal laser sintering (DMLS), direct metal laser melting (DMLM), plasma transferred arc, freeform fabrication, etc. A particular type of additive manufacturing process uses an energy beam, for example, an electron beam or electromagnetic radiation such as a laser beam, to sinter or melt a powder material. Additive manufacturing processes often employ relatively expensive metal powder materials or wire as a raw material. In alternate embodiments, however, the shroud 100 may be formed via casting, machining, and/or any suitable manufacturing process.

The shroud 100 is described above as being positioned the first shroud assembly 72(a) in the HP turbine 28. Nevertheless, the various embodiments of the shroud 100 may be positioned adjacent to any row of turbine rotor blades in the HP turbine 28. Furthermore, the various embodiments of the shroud 100 may also be positioned the LP turbine 30, the LP compressor 22, and/or the HP compressor 24.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A shroud (100) for a gas turbine (10,14), comprising:
an outer box (102) comprising a first wall (180) and a second wall (186) circumferentially spaced apart from the first wall (180); and
an inner box (110) positioned within the outer box (102), the inner box (110) defining one or more passageways (136) extending therethrough and a first chamber (112);
wherein the inner box (110) and the outer box (102) collectively define a second chamber (114), the one or more passageways (136) defined by the inner box (110) fluidly coupling the first chamber (112) and the second chamber (114); and
wherein the first wall (180) of the outer box (102) defines a first boss (196) and first notch (212) and the second wall (186) of the outer box (102) defines a second boss (198) and a second notch (210);
wherein the first wall (180) defines a first outlet port (202) and the second wall (186) defines a second outlet port (204); and
wherein the first outlet port (202) and the second outlet port (204) are in fluid communication with the second chamber (114); **characterised in that**, the first outlet port (202) is positioned radially outward of the first boss (196) and the second boss (198) and the second outlet port (204) is positioned radially outward of the first boss (196) and the second boss (198)

2. The shroud (100) of claim 1, further comprising:
an annular ligament (178) coupling the inner box (110) and the outer box (102).

3. The shroud (100) of claim 2, wherein the annular ligament (178) comprises a radius (206).

4. The shroud (100) of any of the preceding claims, wherein the second chamber (114) comprises a first portion (170) positioned radially inwardly from the first chamber (112) and a second portion (174) positioned radially outwardly from the first chamber (112).

5. The shroud (100) of any of the preceding claims, wherein the outer box (102) encapsulates at least fifty percent of the inner box (110).

6. The shroud (100) of any of the preceding claims, wherein the outer box (102) encapsulates a portion of the inner box (110) positioned axially and circumferentially outwardly from the inner box (110).

7. The shroud (100) of any of the preceding claims, further comprising:
a stem (104) extending outwardly from the outer box (102), the stem (104) defining an inlet port (302) in fluid communication with the first chamber (112).

8. The shroud (100) of claim 7, wherein the stem (104) receives a fastener (118) to couple the shroud (100) to a stator (92) of a gas turbine (10, 14).

9. The shroud (100) of claim 2, wherein the inner box (110) comprises a radially outer wall (130) integrally coupled to the annular ligament (178), and wherein the annular ligament (178) and the radially outer wall (130) permit the inner box (110) and the outer box (102) to thermally expand and thermally contract independently.

10. A gas turbine (10,14)), comprising:
a compressor section (22, 24);
a combustion section (26); and
a turbine section (28, 30) comprising a plurality of axially aligned and circumferentially spaced apart turbine shrouds (100) coupled to a stator (92), each of the plurality of turbine shrouds (100) being according to the shroud of any of claims 1 to 9.

11. The gas turbine (10,14)) of claim 10, wherein the plurality of turbine shrouds (100) comprises a first shroud (100(a)) and a second shroud (100(b)) adjacent to the first shroud (100(a)), and wherein the first boss (196) of the first shroud (100(a)) is positioned in the second notch (210) of the second shroud (100(b)) and the second boss (198) of the second shroud (100(b)) is positioned in the first notch (212) of the first shroud (100(a)) to form a joint (200) between the first shroud (100(a)) and the second shroud (100(b)).

12. The gas turbine (10,14) of claim 11, wherein the first shroud (100(a)) and the second shroud (100(b)) define a channel (194) therebetween, and wherein the outlet port (202) of the first wall (180) of the first shroud (100(a)) is in fluid communication with the second chamber (114) of the first shroud (100(a)) and the channel (194), and the outlet port (204) of the second wall (186) of the second shroud (100(b)) is in fluid communication with the second chamber (114) of the second shroud (100(b)) and the channel (194).

13. The gas turbine of any of the preceding claims 10 to 12, further comprising:
an annular ligament (178) coupling the inner box (110) and the outer box (102), the annular ligament (178) comprising a radius.

14. The gas turbine of any of the preceding claims 10 to 13, wherein each of the plurality of turbine shrouds (100) comprises one or more seals positioned between the turbine shroud (100) and a casing.

## Patentansprüche

1. Ummantelung (100) für eine Gasturbine (10, 14), aufweisend:
ein Außengehäuse (102), das eine erste Wand (180) und eine zweite Wand (186), die in Umfangsrichtung von der ersten Wand (180) beabstandet ist, aufweist; und
ein Innengehäuse (110), das im Innern des Außengehäuses (102) angeordnet ist, wobei das Innengehäuse (110) einen oder mehrere Durchgänge (136), die sich dort hindurch erstrecken, und eine erste Kammer (112) definiert;
wobei das Innengehäuse (110) und das Außengehäuse (102) gemeinsam eine zweite Kammer (114) definieren, wobei der eine oder die mehreren Durchgänge (136), die von dem Innengehäuse (110) definiert werden, die erste Kammer (112) und die zweite Kammer (114) fluidisch verbinden; und
wobei die erste Wand (180) des Außengehäuses (102) einen ersten Vorsprung (196) und eine erste Kerbe (212) definiert und die zweite Wand (186) des Außengehäuses (102) einen zweiten Vorsprung (198) und eine zweite Kerbe (210) definiert;
wobei die erste Wand (180) eine erste Auslassöffnung (202) definiert und die zweite Wand (186) eine zweite Auslassöffnung (204) definiert; und
wobei die erste Auslassöffnung (202) und die zweite Auslassöffnung (204) in Fluidverbindung mit der zweiten Kammer (114) stehen; **dadurch gekennzeichnet, dass** die erste Auslassöffnung (202) radial außerhalb des ersten Vorsprungs (196) und des zweiten Vorsprungs (198) angeordnet ist und die zweite Auslassöffnung (204) radial außerhalb des ersten Vorsprungs (196) und des zweiten Vorsprungs (198) angeordnet ist.

2. Ummantelung (100) nach Anspruch 1, ferner aufweisend:
ein ringförmiges Band (178), das das Innengehäuse (110) und das Außengehäuse (102) verbindet.

3. Ummantelung (100) nach Anspruch 2, wobei das ringförmige Band (178) einen Radius (206) aufweist.

4. Ummantelung (100) nach einem der vorhergehenden Ansprüche, wobei die zweite Kammer (114) einen ersten Abschnitt (170), der radial einwärts von der ersten Kammer (112) angeordnet ist, und einen zweiten Abschnitt (174) aufweist, der radial auswärts von der ersten Kammer (112) angeordnet ist.

5. Ummantelung (100) nach einem der vorhergehenden Ansprüche, wobei das Außengehäuse (102) mindestens fünfzig Prozent des Innengehäuses (110) einkapselt.

6. Ummantelung (100) nach einem der vorhergehenden Ansprüche, wobei das Außengehäuse (102) einen Abschnitt des Innengehäuses (110) einkapselt, der axial und in Umfangsrichtung auswärts von dem Innengehäuse (110) angeordnet ist.

7. Ummantelung (100) nach einem der vorhergehenden Ansprüche, ferner aufweisend:
einen Schaft (104), der sich von dem Außengehäuse (102) nach außen erstreckt, wobei der Schaft (104) eine Einlassöffnung (302) definiert, die in Fluidverbindung mit der ersten Kammer (112) steht.

8. Ummantelung (100) nach Anspruch 7, wobei der Schaft (104) ein Verbindungselement (118) zum Verbinden der Ummantelung (100) mit einem Stator (92) einer Gasturbine (10, 14) aufnimmt.

9. Ummantelung (100) nach Anspruch 2, wobei das Innengehäuse (110) eine radial äußere Wand (130) aufweist, die einstückig mit dem ringförmigen Band (178) verbunden ist, und wobei das ringförmige Band (178) und die radial äußere Wand (130) es dem Innengehäuse (110) und dem Außengehäuse (102) ermöglichen, sich unabhängig thermisch auszudehnen und thermisch zu schrumpfen.

10. Gasturbine (10, 14), aufweisend:
einen Verdichterabschnitt (22, 24);
einen Verbrennungsabschnitt (26); und
einen Turbinenabschnitt (28, 30), der eine Vielzahl von axial ausgerichteten und in Umfangsrichtung beabstandeten Turbinenummantelungen (100) aufweist, die mit einem Stator (92) verbunden sind, wobei jede der Vielzahl von Turbinenummantelungen (100) der Ummantelung nach einem der Ansprüche 1 bis 9 entspricht.

11. Gasturbine (10, 14) nach Anspruch 10, wobei die Vielzahl von Turbinenummantelungen (100) eine erste Ummantelung (100(a)) und eine zweite Ummantelung (100(b)) angrenzend an die erste Ummantelung (100(a)) aufweist, und wobei der erste Vorsprung (196) der ersten Ummantelung (100(a)) in der zweiten Kerbe (210) der zweiten Ummantelung (100(b)) angeordnet ist, und der zweite Vorsprung (198) der zweiten Ummantelung (100(b)) in der ersten Kerbe (212) der ersten Ummantelung (100(a)) angeordnet ist, um eine Verbindung (200) zwischen der ersten Ummantelung (100(a)) und der zweiten Ummantelung (100(b)) zu bilden.

12. Gasturbine (10, 14) nach Anspruch 11, wobei die erste Ummantelung (100(a)) und die zweite Ummantelung (100(b)) zwischen sich einen Kanal (194) definieren, und wobei die Auslassöffnung (202) der ersten Wand (180) der ersten Ummantelung (100(a)) in Fluidverbindung mit der zweiten Kammer (114) der ersten Ummantelung (100(a)) und dem Kanal (194) steht, und die Auslassöffnung (204) der zweiten Wand (186) der zweiten Ummantelung (100(b)) in Fluidverbindung mit der zweiten Kammer (114) der zweiten Ummantelung (100(b)) und dem Kanal (194) steht.

13. Gasturbine nach einem der vorhergehenden Ansprüche 10 bis 12, ferner aufweisend: ein ringförmiges Band (178), das das Innengehäuse (110) und das Außengehäuse (102) verbindet, wobei das ringförmige Band (178) einen Radius aufweist.

14. Gasturbine nach einem der vorhergehenden Ansprüche 10 bis 13, wobei jede der Vielzahl von Turbinenummantelungen (100) eine oder mehrere Dichtungen aufweist, die zwischen der Turbinenummantelung (100) und einem Gehäuse angeordnet sind.

## Revendications

1. Virole (100) pour turbine à gaz (10, 14), comprenant :
un boîtier extérieur (102) comprenant une première paroi (180) et une seconde paroi (186) espacée de manière circonférentielle de la première paroi (180), et
un boîtier intérieur (110) positionné dans le boîtier extérieur (102), le boîtier intérieur (110) définissant un ou plusieurs passages (136) s'étendant à travers celui-ci et une première chambre (112) ;
dans laquelle le boîtier intérieur (110) et le boîtier extérieur (102) définissent collectivement une seconde chambre (114), les un ou plusieurs passages (136) définis par le boîtier intérieur (110) reliant par voie fluidique la première chambre (112) et la seconde chambre (114), et
dans laquelle la première paroi (180) du boîtier extérieur (102) définit un premier bossage (196) et une première encoche (212), et la seconde paroi (186) du boîtier extérieur (102) définit un second bossage (198) et une seconde encoche (210) ;
dans laquelle la première paroi (180) définit un premier orifice de sortie (202) et la seconde paroi (186) définit un second orifice de sortie (204), et
dans laquelle le premier orifice de sortie (202) et le second orifice de sortie (204) présentent une communication fluidique avec la seconde chambre (114) ; **caractérisée en ce que** le premier orifice de sortie (202) est positionné vers l'extérieur de manière radiale par rapport au premier bossage (196) et au second bossage (198), et le second orifice de sortie (204) est positionné vers l'extérieur de manière radiale par rapport au premier bossage (196) et au second bossage (198).

2. Virole (100) selon la revendication 1, comprenant en outre :
une liaison annulaire (178) reliant le boîtier intérieur (110) et le boîtier extérieur (102).

3. Virole (100) selon la revendication 2, dans laquelle la liaison annulaire (178) comprend un rayon (206).

4. Virole (100) selon l'une quelconque des revendications précédentes, dans laquelle la seconde chambre (114) comprend une première portion (170) positionnée vers l'intérieur de manière radiale à partir de la première chambre (112) et une seconde portion (174) positionnée vers l'extérieur de manière radiale à partir de la première chambre (112).

5. Virole (100) selon l'une quelconque des revendications précédentes, dans laquelle le boîtier extérieur (102) encapsule au moins cinquante pourcent du boîtier intérieur (110).

6. Virole (100) selon l'une quelconque des revendications précédentes, dans laquelle le boîtier extérieur (102) encapsule une portion du boîtier intérieur (110) positionné vers l'extérieur de manière axiale et de manière circonférentielle à partir du boîtier intérieur (110).

7. Virole (100) selon l'une quelconque des revendications précédentes, comprenant en outre :
une tige (104) s'étendant vers l'extérieur à partir du boîtier extérieur (102), la tige (104) définissant un orifice d'entrée (302) présentant une communication fluidique avec la première chambre (112).

8. Virole (100) selon la revendication 7, dans laquelle la tige (104) reçoit une attache (118) afin de relier la virole (100) à un stator (92) d'une turbine à gaz (10, 14).

9. Virole (100) selon la revendication 2, dans laquelle le boîtier intérieur (110) comprend une paroi extérieure de manière radiale (130) reliée d'un seul tenant avec la liaison annulaire (178), et dans laquelle la liaison annulaire (178) et la paroi extérieure de manière radiale (130) permettent au boîtier intérieur (110) et au boîtier extérieur (102) de se dilater de manière thermique et de se contracter de manière thermique indépendamment.

10. Turbine à gaz (10, 14), comprenant :
une section de compresseur (22, 24) ;
une section de combustion (26), et
une section de turbine (28, 30) comprenant une pluralité de viroles de turbine (100), alignées de manière axiale et espacées de manière circonférentielle, reliées à un stator (92), chacune de la pluralité de viroles de turbine (100) se présentant conformément à la virole (100) selon l'une quelconque des revendications 1 à 9.

11. Turbine à gaz (10, 14) selon la revendication 10, dans laquelle la pluralité de viroles de turbine (100) comprend une première virole (100(a)) et une seconde virole (100(b)) adjacente à la première virole (100(a)), et dans laquelle le premier bossage (196) de la première virole (100(a)) est positionné dans la seconde encoche (210) de la seconde virole (100(b)), et le second bossage (198) de la seconde virole (100(b)) est positionné dans la première encoche (212) de la première virole (100(a)) afin de former un joint (200) entre la première virole (100(a)) et la seconde virole (100(b)).

12. Turbine à gaz (10, 14) selon la revendication 11, dans laquelle la première virole (100(a)) et la seconde virole (100(b)) définissent un canal (194) entre elles, et dans laquelle l'orifice de sortie (202) de la première paroi (180) de la première virole (100(a)) présente une communication fluidique avec la seconde chambre (114) de la première virole (100(a)) et le canal (194), et l'orifice de sortie (204) de la seconde paroi (186) de la seconde virole (100(b)) présente une communication fluidique ave la seconde chambre (114) de la seconde virole (100(b)) et le canal (194).

13. Turbine à gaz selon l'une quelconque des revendications précédentes 10 à 12, comprenant en outre :
une liaison annulaire (178) raccordant le boîtier intérieur (110) et le boîtier extérieur (102), la liaison annulaire (178) comprenant un rayon.

14. Turbine à gaz selon l'une quelconque des revendications précédentes 10 à 13, dans laquelle chacune de la pluralité de viroles de turbine (100) comprend un ou plusieurs joints d'étanchéité positionnés entre la virole de turbine (100) et un corps.
